# EUROPÄISCHE PATENTSCHRIFT

(11) **EP 1 838 419 B1**
(45) Veröffentlichungstag und Bekanntmachung des Hinweises auf die Patenterteilung: **11.05.2011**
(21) Anmeldenummer: 06706214.1
(22) Anmeldetag: 12.01.2006
(51) Int. Cl.: B01D 53/10, C03B 3/02, C03B 5/235, B01J 8/12, B01D 53/56, B01D 53/86, B01D 53/64

(54) **VERFAHREN ZUM REINIGEN VON ABGASEN EINES GLASSCHMELZPROZESSES, INSBESONDERE FÜR GLÄSER FÜR LCD-BILDSCHIRME**
METHOD FOR PURIFYING WASTE GASES OF A GLASS MELTING PROCESS, PARTICULARLY FOR GLASSES FOR LCD DISPLAYS
PROCEDE D'EPURATION DE GAZ D'ECHAPPEMENT LORS D'UN PROCESSUS DE FUSION DU VERRE, EN PARTICULIER DE VERRES POUR ECRANS LCD

(30) Priorität: 12.01.2005 DE 102005001595
(43) Veröffentlichungstag der Anmeldung: 03.10.2007
(73) Patentinhaber: Grochowski, Horst, 46149 Oberhausen (DE)
(72) Erfinder: Grochowski, Horst, 46149 Oberhausen (DE)
(74) Vertreter: Schumacher, Horst
(86) Internationale Anmeldenummer: PCT/EP2006/000242
(87) Internationale Veröffentlichungsnummer: WO 2006/084539

(56) Entgegenhaltungen:
- EP-A- 0 995 495
- DE-C- 883 598
- US-A- 3 880 639
- US-A- 4 221 768
- US-A- 4 631 178
- PATENT ABSTRACTS OF JAPAN Bd. 001, Nr. 013 (C-005), 22. März 1977 (1977-03-22) -& JP 51 129871 A (ASAHI GLASS CO LTD), 11. November 1976 (1976-11-11)

## Beschreibung

Die Erfindung betrifft ein Verfahren zum Reinigen von Abgasen einer Glasschmelzwanne gemäß dem Oberbegriff von Anspruch 1.

Die beim Glasschmelzen anfallenden heißen Abgase enthalten in erheblichem Umfang Stickoxyde (NOₓ), welche neben CO₂, O₂, H₂O und N₂ anfallen. Stickoxyde müssen als Umweltgifte aus dem Abgas entfernt werden. Diese NOₓ-Reinigung gestaltet sich unter anderem deshalb als aufwendig, weil in dem Abgas weitere Schadstoffkomponenten enthalten sind, die als sogenannte Katalysatorgifte die NOₓ-Reinigung behindern würden und daher aus dem Abgas in erheblichem Umfang entfernt werden müssen, bevor die NOₓ-Reinigung beginnt. Typische Schadstoffkomponeten, die in den Abgasen einer Glasschmelzwanne anfallen können, sind SO₂, HCl, Schwermetalle, insbesondere Hg, Dioxine, Furane und kondensierbare Rückstände sowie Stäube. Als besonders problematisch für die Abgasreinigung an Glasschmelzwannen sind die in vielen Fällen im Abgas enthaltenen Bor- und/oder Arsenverbindungen, aber auch Kalzium-, Stronzium- und Bariumverbindungen und/oder weitere Bestandteile, die aus Zusätzen in SiO₂-haltigem Rohmaterial für die Glasherstellung stammen. Die entsprechenden SchadstoffKomponenten fallen bei den verschiedensten Glassorten an, insbesondere bei Glassorten, die für LCD-Bildschirme Verwendung finden. So werden in vielen Fällen Arsen haltige Verbindungen der Glasschmelze zugesetzt, um die Schmelze möglichst dünnflüssig und blasenfrei zu machen. Das vielen Gläsern zugesetzte Bomitrat erzeugt im Abgas einen hohen NOₓ Anteil. Andere Zusätze, die als solche oder in anderer Form aus der Glasschmelze verdampfen stellen in der Regel ebenfalls Schadstoffe dar, die aus dem Prozessabgas (Verbrennungsabgas und aus der Glasschmelze anfallendes Abgas) entfernt werden müssen.

In der Vergangenheit wurde zur Abgasreinigung der Glaswannenabgase das etwa 1650°C heiße Abgas, insbesondere durch Verdünnungsluft und/oder Quenchen stark abgekühlt auf Temperaturen, die für die Anwendung eines Schlauchfilters als Vorreinigungsstufe geeignet sind. Die in dem Abgas enthaltenen Bohr- und Arsenverbindungen gehen unmittelbar aus der Gasphase in die Festphase bei Temperaturen zwischen 65°C und 100°C über. Bei der Abkühlung des Abgases wird keine vollständige Sublimation der oben genannten Schadstoffkomponenten erreicht. Der mit einem Gewebefilter erreichbare Reinigungsgrad ist abhängig von der Partikelgröße. Diese ist wiederum abhängig von der Temperatur, dem Gasdruck und der Gasverweilzeit im Verdampfungskühler (Quenche). Man müsste also möglichst eine niedrige Temperatur und eine relativ lange Verweilzeit wählen, um eine ausreichende Partikelgröße zu erreichen, sodass die Partikel auch mit einem Gewebefilter abgeschieden werden können. Obwohl Bor- und Arsenverbindungen bei den am Schlauchfilter auftretenden Temperaturen bereits im Verdampfungskühler sublimieren, sind die dabei gebildeten Kristalle sehr klein. Außerdem benötigt die Kristallbildung - wie erwähnt - eine gewisse Verweilzeit in dem Sublimationstemperaturbereich. Die meisten Bor- und Arsenverbindungen konnten in dem Schlauchfilter daher nicht ausreichend entfernt werden, so dass eine nachfolgende Nasswäsche erforderlich war, um einen Vorreinigungsgrad zu erhalten, der eine anschließende NOₓ-Reinigung ohne allzu große Katalysatorschädigung zulässt. Durch die Nasswäsche entstehen weitere Umweltprobleme, da die Waschflüssigkeit ihrerseits wieder von den dort abgeschiedenen Komponenten befreit werden muss, bevor die Waschflüssigkeit wiederverwendet oder als Abwasser aus dem Prozess abgeführt wird. Man verlagerte also das Gasreinigungsproblem auf ein Abwasserreinigungsprobiem.

Für die NOx-Reduzierung ist eine größere Anzahl an kommerziell einsetzbaren Verfahren, wie SCR, SNCR und Wäsche mit Oxidantien bekannt. Sieht man von der Wäsche mit Oxidantien ab, so arbeiten alle bisher kommerziell eingesetzten Verfahren oberhalb einer Mindestabgas-Temperatur. Diese liegt mindest bei 160°C (Niedertemperaturkatalysatoren) und im Allgemeinen oberhalb von 300°C. Für die am weitesten verbreitete Technologie mit Katalysatoren stellen die oben genannten Schadstoffkomponenten, zumindest teilweise Katalysatorgifte dar.

Aus der Stand der US-A-4 221 768 ist es bekannt, Katalysatoren zur Abgasreinigung zu verwenden und hierbei den Focus auf die Entfernung von NOₓ und SOₓ zu legen. Zu diesem Zweck können verschiedene Trägermaterialien, zu denen auch Aktivkohle gezählt werden, mit dem gewünschten Katalysator belegt sein. Fernerhin wird die Anwendbarkeit auf Abgase von Glasschmelzöfen, die Anwendung von Ammoniak sowie die Verwendbarkeit von Wanderbettreaktoren offenbart, wobei allerdings die Reaktionstemperatur vorzugsweise zwischen 200 und 400°C liegt

Der JP Abstract Bd. 001, Nr.012 und die JP 51 129 871 A offenbaren für die Reinigung von Abgasen von Glasschmelzöfen ein katalytisches Wanderbett für die Entstickung. Hierzu verwendet sie eine horizontal wandernde Partikelschüttung, die im Kreuzstrom von dem zu reinigenden Gas angeströmt wird.

Davon ausgehend erliegt der Erfindung die Aufgabe zugrunde, dass gattungsgemäße Reinigungsverfahren für Abgase einer Glasschmelzwanne dahin gehend zu vereinfachen, dass ein hoher NOₓ-Abscheidegrad mit weniger Verfahrensschritten als vorbeschrieben möglich wird. Zur Lösung dieser Aufgabe wird das Verfahren mit dem Merkmal des Anspruchs 1 vorgeschlagen.

Die Erfindung beruht demnach auf dem Grundgedanken, die beim Glasschmelzen anfallenden Abgase - gegebenenfalls nach einer Vorreinigungsstufe - in einem einzigen Wanderbett an zumindest einem katalytisch wirksamen Adsorptions- und/oder Absorptionsmittel in zwei Stufen zu reinigen, d.h. in der ersten Reinigungsstufe im unmittelbaren Anströmbereich und gegebenenfalls daran unmittelbar anschließenden Schicht des Wanderbettmaterials die katalysatorschädigenden Schadstoffkomponenten, insbesondere Bor- und/oder Arsenverbindungen absorptiv zu binden und partikelförmige Komponenten zu adherieren, und in der zweiten Reinigungsstufe eine weitgehende Entstickung in der der ersten Reinigungsstufe in Gasströmungsrichtung nachfolgenden Schicht des Wanderbettes durchzuführen. Das Adsorpions- oder Absorptionsmaterial im Wanderbett erfährt mithin einen zweistufigen Prozess, bei dem frisch aufgegebenes Material, vorzugsweise unter Zugabe von Ammoniak das NOₓ in unschädliches N₂ und Wasserdampf katalytisch umwandelt und während der weiteren Verweilzeit unter Annäherung an den Anströmbereich des Wanderbettes die übrigen Schadstoffkomponenten adsorptiv, absorptiv oder adhesiv bindet und anschließend aus dem Wanderbett ausgeschleust wird. Dabei wird im Sinne der Erfindung unter Adsorption ein Vorgang verstanden bei dem eine oder mehrere Komponente/n aus dem Abgas unmittelbar adsobiert wird/werden. Unter Absorption wird im Sinne der Erfindung verstanden, dass aus dem zu reinigenden Abgas stammende Stoffe zunächst eine chemische Reaktion unterlaufen und erst nachfolgend adsorbiert werden.

Das, nachfolgend als Carbon Selective Catalytic Reduction (CSCR) bezeichnete Verfahren nach der Erfindung gewährleistet eine hohe NOx-Abscheidung unter der besonderen Berücksichtigung von gasförmigen und staubförmigen Feinstpartikeln. Das Verfahren arbeitet, vorzugsweise, bei einer Temperatur zwischen 90°C und 160°C, die bevorzugte Arbeitstemperatur liegt zwischen 90°C und 110°C.

Als katalytisch wirksame Adsorptions- und/oder Absorptionsmittel kommen unter anderem Aktivkokse infrage, aber auch Mischungen aus kohlenstoffhaltigen Adsorptionsund/oder Absorptionsmitteln mit Reaktionsmitteln, insbesondere solchen für saure Schadstoffkomponenten, beispielsweise Kalk. Bevorzugt zum Einsatz kommt ein spezieller Aktivkoks bzw. ein Granulat, welches aus anorganischen Komponenten oder einem Gemisch aus anorganischen plus organischen Bestandteilen/Komponenten besteht.

Zu dem katalysatorschädigenden gasförmigen Schadstoffkomponenten, die in der in Gasströmungsrichtung gesehen ersten Reinigungsstufe in dem Wanderbettreaktor im Anströmbereich und gegebenenfalls in der unmittelbar benachbarten Schicht aus dem Abgas entfernt werden, zählen neben den für den Glasschmelzprozesse besonders typischen, aus Zusätzen zum Grundmaterial herrührenden Komponenten, wie Borund/oder Arsenverbindungen, auch SO₂, HCl, kondensierbare Rückstände, Schwermetalle, sowie partikelförmige Komponenten, wie Stäube und auch Kristalle, wie sie bei der Gassublimation in sehr kleinen Partikelgrößen anfallen und besonders kritisch sind.

Durch die Erfindung werden unter anderem folgende Vorteile erreicht:

### Wirtschaftlicher Aspekt:

Die Gasreinigung kann ununterbrochen betrieben werden, bis die Glasschmelze heruntergefahren wird. Bei der Verwendung von herkömmlichen SCR-Katalysatoren wird keine ausreichende Standzeit erreicht. Weil eine Glasschmelze bis zur Erneuerung der Ausmauerung nicht abgestellt wird bzw. nicht abgestellt und wieder angefahren werden kann, musste ein Katalysator mit einer Mindeststandzeit die der Laufzeit der Glasschmelze entspricht gefunden werden oder es mussten 2 DENOx-Anlagen gebaut werden, so dass umgeschaltet werden kann. Diese Vorgehensweise würde den Glasherstellungsprozess erheblich verteuern.
- Durch den erfindungsgemäß möglichen Wegfall der Nasswaschstufe fallen hierfür nicht nur die Investitionskosten und Betriebskosten fort, sondern es fällt auch ein Großteil der Energiekosten für die Wiederaufheizung fort. Die notwendige Wasserreinigung des Abwassers aus der Nasswäsche würde einen weiteren erheblichen Kostenfaktor darstellen. Schließlich wirkt sich eine Absenkung des Wasserdampfgehaltes im Abgas positiv auf den DENOx-Prozess aus und führt zu einer Verringerung der erforderlichen Adsorptions-/Absorptionsmasse.

### Ökologischer Aspekt:

- Durch den Wegfall der Nasswaschstufe entfällt auch die Umweltbelastung aus der verbleibenden Restkonzentration im gereinigten Waschwasser.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Abgasreipigungsanlage für Glaswannenabgase dargestellt ist.

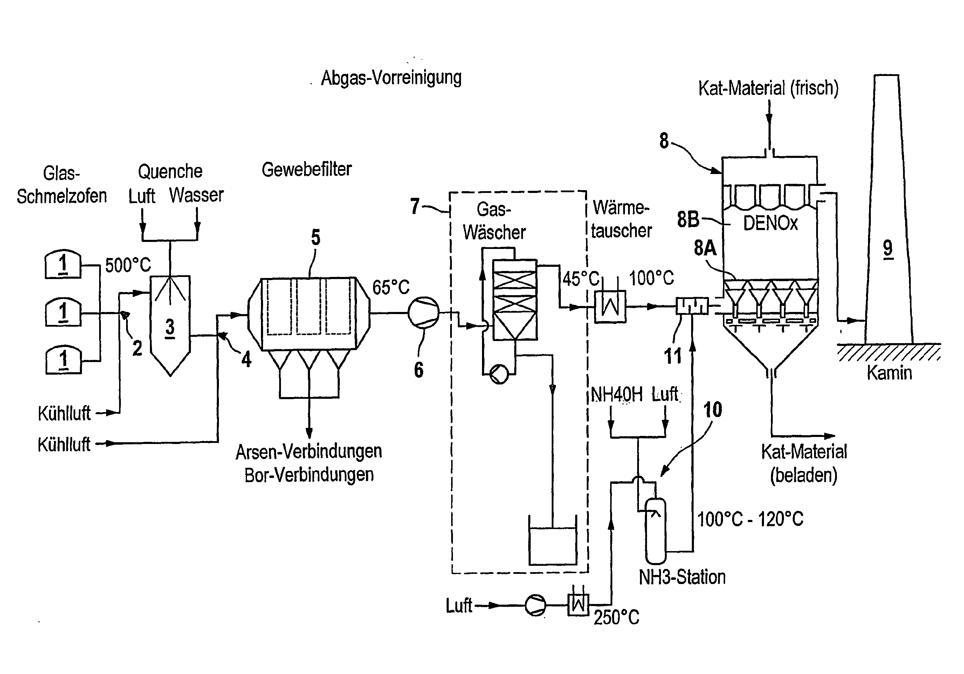

Die einzige Figur zeigt bei beispielhaft ein Blockscheidbild für ein erfindungsgemäßes Reinigungsverfahren für Abgase eines Glasschmelzprozesses:

Ein oder mehrere Glasschmelzöfen 1 werden in üblicher Weise mit heißen Verbrennungsabgasen aus der Verbrennung gasförmiger und/oder flüssiger Brennstoffe beheizt, wobei das an einem Ende der jeweiligen Glasschmelzwanne aufgegebene, SiO₂ sowie Zusätze enthaltende Rohmaterial geschmolzen und am anderen Wannenende abgezogen wird. Die dabei anfallenden Abgase setzen sich zum einen aus den Verbrennungsabgasen und zum anderen aus denjenigen Gasen zusammen, die von der Glasschmelze entweichen. Diese, gemeinsam als Abgase des Glasschmelzprozesses bezeichneten Gase werden an einer mit 2 bezeichneten Stelle durch Zugabe von Kühlluft von zunächst etwa 1650°C auf etwa 500°C gekühlt. In einer mit 3 bezeichneten Quencheinrichtung wird das so gekühlte Gas mit Wasser bedüst und weiter abgekühlt. An einer nachfolgenden, mit 4 bezeichneten Stelle kann eine weitere Abkühlung auf ca. 65°C erfolgen, wobei die dabei eingestellte Temperatur so gewählt ist, dass sie nicht nur eine Gasvorreinigung an einem mit 5 bezeichneten Gewebefilter gestattet, sondern auch, dass vor dem Gewebefilter bereits Sublimationsprozesse stattfinden können und die Kristalle des Sublimates in gewissem Umfang in dem Gewebefilter abgefangen werden können. Eine weitere Temperaturabsenkung ist zwar wünschenswert, um eine möglichst hohe Sublimationsrate zu erreichen, dem aber der Taupunkt des Abgases entgegen steht. Auf diese Weise können die in dem Abgas des Glasschmelzprozesses etwa anfallenden Arsen- und/oder Borverbindungen, welche Katalysatorgifte darstellen, zumindest teilweise abgefangen werden. Wegen der geringen Kristallgröße solcher Sublimate und einer erforderlichen Mindestverweilzeit auf Sublimationstemperatur lässt das Gewebefilter 5 allerdings einen Teil der Arsen- und/oder Borverbindungen - gasförmig oder fest - durch. Diese können in einer nachfolgenden, insgesamt mit 7 bezeichneten Nasswaschstufe, der ein Gebläse 6 vorgeschaltet sein kann, zusammen mit anderen wasserlöslichen Salzen zum Teil entfernt werden. Im Übrigen können in der Nasswaschstufe auch Katalysatorgifte, wie HCl und SO₂ zumindest teilweise entfernt werden. Dies gegebenenfalls unter Zugabe eines Reduktionsmittels wie NaOH. Das dabei anfallende Waschwasser muss nachbehandelt werden. Ferner muss das mit etwa 45°C austretende Abgas wieder aufgeheizt werden.

Es hat sich gezeigt, dass auch ein Betrieb der DENOx-Anlage ohne vorgeschalteten Abgaswäscher bei gleichhohem NOx-Abscheidegrad erfolgreich betrieben werden kann. In diesem Fall ist es allerdings meistens erforderlich, die Granulatabzugsmenge aus dem Reaktor, d.h. den Granulat-Durchsatz, zu erhöhen. Das Abgas enthält aber immer noch Restspuren von gasförmigen und sublimationsfähigen Schadstoffkomponenten. Über einen Wärmetauscher wird das Abgas von 45°C auf Reaktionstemperatur von ca. 100°C gebracht. Vor Eintritt des so vorgereinigten Abgases wird NH₃ zugemischt. Jedenfalls wird das im Gewebefilter 5 vorgereinigte Abgas einer an sich bekannten Wanderbettreaktoranlage 8 zugeführt, wie sie unter anderem in der W088/08746 beschrieben ist und welche als Gegenstromwanderbettreaktoranlage ausgelegt ist. Bei dieser wird das zu reinigende Abgas von unten über einen Anströmboden, vorzugsweise einen solchen, wie er aus der WO88/08746 bekannt ist, einer von oben nach unten wandernden Adsorptionsmittelschicht geeigneter Schichtstärke und Materialzusammensetzung aufgegeben. Am oberen Ende der Adsorptionsmittelschicht wird das abströmende Gas aus der Wanderbettreaktoranlage abgeleitet und z.B. einen Karmin 9 zugeführt. Der Adsorptionsmittelschicht wird von oben frisches oder regeneriertes Adsorptionsmittel, vorzugsweise Aktivkoks, der gegebenenfalls mit Kalk oder ähnlichem gemischt ist, taktweise aufgegeben, während verbrauchtes Adsoprtionsmittel am Anströmboden getaktet abgezogen wird. Die optimal ausgetragene Granulatmenge ist dann erreicht, wenn mit ihr die eingetragenen staubund gasförmigen Schadstoffkomponenten ausgetragen werden.

Im unmittelbaren Anströmbereich und gegebenenfalls in einer daran nach oben sich anschließenden benachbarten unteren Schicht des Wanderbettes befindet sich die erste Abscheidungsstufe 8A. Das bei Temperaturen in der Größenordnung von 100°C (größere und niedrigere Temperaturen sind möglich) in die erste Abscheidungsstufe eintretende Abgas wird an dem Adsorptions- und/oder Absorptionsmittel einer ersten Reinigung unterzogen. Zumindest werden aus der Zusammensetzung des Rohmaterials des geschmolzenen Gases stammende katalysatorschädigende Verbindungen, wie Bor- und/oder Arsenverbinden, ad- und/oder absoprtiv gebunden. Außerdem werden etwa vorhandene Stäube und andere partikelförmige Komponenten insbesondere auch Sublimationskristalle an dem Ab- und/oder Adsorptionsmittel der ersten Abscheidungsstufe 8A adheriert. Soweit das Abgas an dieser Stelle noch SO₂, HCl, Schwermetalle und/oder kondensierbare Rückstände enthält, werden diese in dieser ersten Abscheidungsstufe 8A ebenfalls - zumindest weitgehend - abgeschieden.

Die nach oben folgenden Ad- und/oder Absorptionsmittelschichten bilden die zweite Abscheidungsstufe 8B und sind im wesentlichen frei von katalysatorschädigenden Komponenten, so dass das in dem Abgas vorhandene NOₓ unter Zugabe von z.B. NH₃ oder Harnstoff katalytisch zu N₂ und H₂O umgewandelt werden kann. Gleichzeitig werden andere gasförmige Schadstoffe, wie Dioxine und Furane - soweit vorhanden - adsorptiv gebunden. Auf diese Weise wird in ein und demselben Wanderbettreaktor in zumindest zwei Stufen das NOₓ überraschenderweise zu über 90% abgeschieden. Die in der ersten Abscheidungsstufe abgeschiedenen Katalysatorgifte werden mit dem verbrauchten Ad- und/oder Absorptionsmittel taktweise ausgeschleust, so dass höher liegende Ad- und/oder Absorptionsmittelschichten nicht geschädigt werden. Wenn die Nasswaschstufe 7 - wie grundsätzlich möglich - entfällt, wird also - wie bevorzugt - eine komplett trockene Gasreinigung erreicht.

Für die Zugabe von z.B. NH₃, Harnstoff oder anderen hat es sich als besonders vorteilhaft erwiesen, einen Vormischer 10 zu verwenden. In diesem wird Ammoniak-Wasser mit Luft über eine Zweistoffdüse in einen 200° - 260°C heißen Luftstrom verdampft. In einem Nachmischer 11 wird das auf etwa 100° - 120°C abgekühlte Gemisch dem vorgereinigten Gasstrom vor Eintritt in die Wanderbettreaktoranlage 8 zugemischt.

### Ausführungsbeispiel:

In einer Glasschmelze wird siliziumhaltiges Rohmaterial, welches mit speziellen Begleit- bzw. Zusatzmaterialien wie Bohr- und Arsenverbindungen versetzt ist, bei einer Temperatur von ca. 1.650°C geschmolzen.

Das Einschmelzen erfolgt mit Erdgas als Brennstoff und reinem Sauerstoff (anstatt von Luft). Das es sich bei den Zuschlagstoffen teilweise um Nitrat-/ Nitritverbindungen handelt, enthält das Abgas hohe Konzentrationen an gasförmigen Schadstoffkomponenten wie NOx und gasförmige Bohr- und Arsenverbindungen. Das Abgas muss daher auf eine gesetzlich vorgeschriebene Schadstoff-Konzentrationen abgesenkt werden, bevor es über den Kamin in die Atmosphäre entlassen wird.

Das zu reinigende Abgas wird durch einen zweistufigen DENOx-Reaktor geführt, wobei dieser als Wanderbettreaktor hinsichtlich des Granulats betrieben wird. Beim Durchströmen des Granulatbettes von unten nach oben, werden die gasförmigen Schadstoffkomponenten adsorptiv vom Granulat aufgenommen und im Porensystem des Granulatkornes gespeichert. Das Granulatwanderbett wirkt gleichzeitig als hochwirksames Festbettfilter für staubförmige Feinstpartikel.

Zur NOx-Abscheidung wird die katalytische Wirkung des Granulates genutzt. Dem Abgas wird zur NOx-Reduzierung NH₃, Harnstoff oder andere NOx reduzierende Komponenten beigemischt. Die Abgasreinigung erfolgt nun im Wesentlichen in zwei Schritten, wobei das Abgas nach dem ersten Schritt soweit vorgereinigt ist, dass die katalytische Eigenschaft des Granulates zur NOx-Abscheidung nicht oder nicht wesentlich beeinträchtigt ist.

Das Granulat im Bereich der Anströmung wird durch die oben genannten Schadstoffkomponenten belastet, wodurch die katalytischen Eigenschaften negativ beeinflusst werden.

Durch gezieltes Austragen von beladenem und somit katalytisch geschädigtem Granulat wird die kontaminierte Schichthöhe klein gehalten im Vergleich zur Gesamtschichthöhe des Granulatbettes. Bei dem Absenken des Granulatbettes fließt aus dem Vorratsbunker frisches Granulat durch Schwerkraft nach, sodass die Gesamtschichthöhe des Granulatbettes stets konstant gehalten ist.

Unter dem zweiten Schritt wird die Abgasreinigung von NOx verstanden, bei der das NOx mit NH₃ zu N₂+H₂O reagiert.

Unter den Betriebsbedingungen Abgastemperatur 100°C, NOx-Eingangskonzentration 450 ppm und bei Anwesenheit von zumindest einigen der o.g. sublimierbaren Schadstoffkomponenten werden Abscheidegrade von 90% bis über 95% erreicht.

## Patentansprüche

1. Verfahren zum Reinigen von Abgasen eines Glasschmelzprozesses, insbesondere für Gläser für LCD-Bildschirme, bei dem SiO₂-haltiges, Zusätze wie an Bor-, Arsen- und/oder andere, insbesondere Metall-Verbindungen enthaltendes Rohmaterial für die Glasherstellung der Glaswanne aufgegeben und geschmolzenes Glas von der Glaswanne abgezogen wird und die Glaswanne mittels heißer Verbrennungsabgase beheizt wird, und bei dem
das aus dem Verbrennungsabgas und/oder aus der Glasschmelze **dadurch gekennzeichnet, dass** die Wanderbettreaktoranlage eine Gegenstromwanderbettreaktoranlage ist, stammende, Abgas des Glasschmelzprozesses neben Gaskomponenten aus der Gruppe CO₂, O₂, H₂O und/oder N₂ zumindest NOₓ sowie aus dem Rohmaterial entstehende oder entweichende Schadstoffkomponenten SO₂, HCl, Schwermetalle, insbesondere Hg, Dioxine, Furane, Stäube, kondensierbare Rückstände und/oder Sublimate eines Teils der anorganischen Schadstoffkomponenten enthält,
wobei die Abgase des Glasschmelzprozesses gegebenenfalls nach einer Vorreinigungsstufe, in einer Wanderbettraktoranlage (8) an zumindest einem katalytisch wirksamen Adsorptionsmittel und/oder Absorptionsmittel von den Schadstoffkomponenten in ein und demselben Wanderbett in zumindest zwei Stufen im wesentlichen befreit wird,
**dadurch gekennzeichnet, dass** die Wanderbettraktoranlage eine Gegenstromwanderbettreaktoranlage ist,
dass in dem unmittelbaren Anströmbereich und gegebenenfalls in einer benachbarten unteren Schicht des Wanderbettes (8A) eine erste Abscheidungsstufe gebildet wird, in der katalysatorschädigende Schadstoffkomponenten, zumindest aus der Zusammensetzung des Rohmaterials stammende katalysatorschädigende Verbindungen, wie, Bor- und/oder Arsenverbindungen, absorptiv gebunden sowie die partikelförmigen Komponenten adheriert werden und
dass in dem an den unmittelbaren Anströmbereich und, gegebenenfalls, an die benachbarte untere Schicht des Wanderbettes angrenzenden Schichtbereich (8B) eine zweite Abscheidungsstufe gebildet wird, in der die katalytische Entstickung weitgehend vorgenommen wird, und weitere gegebenenfalls vorhandene nicht katalysatorschädigende Schadstoffkomponenten wie Dioxine und Furane in dieser zweiten Abscheidungsstufe absorptiv entfernt werden.

2. Verfahren nach Anspruch 1, **dadurch gekennzeichnet, dass** der Wanderbettreaktoranlage ein Gewebe- oder Elektrofilter (5) vorgeschaltet wird.

3. Verfahren nach Anspruch 1 oder 2, **dadurch gekennzeichnet, dass** die Gasreinigung in der Wanderbettreaktoranlage bei einer Gaseintrittstemperatur in der Größenordnung von 70 bis 160°C vorzugsweise von 90°C bis 120°C erfolgt.

4. Verfahren nach einem der Ansprüche 1 bis 3, **dadurch gekennzeichnet, dass** das Abgas des Glasschmelzprozesses zunächst, gegebenenfalls unter Zugabe von Verdünnungsluft und/oder Wasser, ein- oder mehrstufig gekühlt bzw. gequencht wird, auf Temperaturen zwischen 50 und 120°C vorzugsweise zwischen 60°C und 100°C.

5. Verfahren nach einem der Ansprüche 1 bis 4, **dadurch gekennzeichnet, dass** die zu entfernenden Schadstoffkomponenten im Wesentlichen aus Arsen- und/oder Borverbindungen besteht.

6. Verfahren nach einem der Ansprüche 1 bis 5, **dadurch gekennzeichnet, dass** die in der ersten Abscheidungsstufe zu entfernenden Schadstoffkomponenten Silizium-, Kalzium-, Strontium- und/oder Bariumverbindungen enthalten.

7. Verfahren nach einem der Ansprüche 1 bis 6, **dadurch gekennzeichnet, dass** die Entstickung unter Ammoniak-Zugabe zu 80% und mehr, vorzugsweise zu 90% und mehr, erfolgt.

8. Verfahren nach einem der Ansprüche 1 bis 7, **dadurch gekennzeichnet, dass** bei der Wanderbettreaktoranlage die Takte, in denen Adsorptions- und/oder Absorptionsmittel am unteren Wanderbettende abgezogen und frische oder regenerierte Adsorptions- und/oder Absorptionsmittel am oberen Ende des Wanderbettes nachgefüllt werden, in Abhängigkeit vom Durchströmungsdruckverlust, den das zu reinigende Abgas über die Durchströmungstiefe oder eine Teiltiefe des Wanderbettes erleidet, oder in Abhängigkeit von der Schädigung die das Adsorptionsund/oder Absortpionsmittels durch die katalysatorschädigenden gasförmigen Komponenten im Anströmbereich und gegebenenfalls in einer benachbarten unteren Schicht erleidet, durchgeführt werden.

9. Verfahren nach einem der Ansprüche 1 bis 8, **dadurch gekennzeichnet, dass** das Adsorptions- und/oder Absorptionsmittel aus einer, gegebenenfalls geschichteten, Mischung aus kohlenstoffhaltigen Adsorptions- und/oder Absorptionsmitteln, insbesondere Aktivkoks, und Reaktionsmitteln für saure Schadstoffkomponenten, wie Alkalien, besteht.

10. Verfahren nach einem der Ansprüche 1 bis 9, **dadurch gekennzeichnet, dass** das Adsorptions- und/oder Absorptionsmittel ein Aktivkoks bzw. ein Granulat ist, welches aus anorganischen Komponenten oder einem Gemisch aus anorganischen plus organischen Bestandteilen/Komponenten besteht.

11. Verfahren nach einem der Ansprüche 1 bis 10, **dadurch gekennzeichnet, dass** die Abgase SO₂, HCl, Schwermetalle, insbesondere Hg, Dioxine, Furane, Stäube, kondensierbare Rückstände und/oder Sublimate eines Teils der anorganischen Schadstoffkomponenten enthalten.

12. Verfahren nach einem der Ansprüche 1 bis 11, **dadurch gekennzeichnet, dass** die kontaminierte Schichthöhe durch Austragen von beladenem und somit katalytisch geschädigtem Granulat im Vergleich zur Gesamtschichthöhe des Granulatbettes klein gehalten wird.

13. Verfahren nach einem der Ansprüche 1 bis 12, **dadurch gekennzeichnet, dass** die in der ersten Abscheidungsstufe abgeschiedenen Katalysatorgifte mit dem verbrauchten Ad- und/oder Absorptionsmittel taktweise ausgeschleust werden.

14. Verfahren nach einem der Ansprüche 1 bis 13, **dadurch gekennzeichnet, dass** die Abgase zunächst so abgekühlt werden, dass Subilmationsprozesse stattfinden können und dass Sublimationskristalle in der ersten Abscheidungsstufe an den Ad- und/oder Absorptionsmitteln adheriert werden.

## Claims

1. Method for purifying waste gases from a glass melting process, particularly for glasses for LCD displays, in which SIO₂-containing raw material for production of the glass containing additives such as boron, arsenic and/or other, in particular metallic compounds are added to the glass trough and molten glass is drawn off from the glass trough and the glass trough is heated by means of hot combustion waste gases, and in which in addition to gas components from the group CO₂, O₂, H₂O and/or N₂, the waste gas from the glass melting process originating from the combustion waste gas and/or from the molten glass contains at least NOₓ, as well as the toxic components produced by or escaping from the raw material SO₂, HCl, heavy metals, in particular Hg, dioxins, furans, dusts, condensable residues and/or sublimates of a part of the inorganic toxic components, whereby the waste gases from the glass melting process are, possibly following a pre-purification phase, substantially freed of the toxic components by at least one catalytically active adsorbent and/or absorbent agent in a moving bed reactor, in the same moving bed, in at least two stages, **characterised in that** the moving bed reactor is a counterflow moving bed reactor, that in the immediate inflow region and possibly in an adjacent lower layer of the moving bed a first separation stage is formed in which catalyst-damaging toxic components, at least catalyst-damaging compounds originating from the composition of the raw material, such as boron and/or arsenic compounds, are absorbtively bound and the particle-formed components adhered, and that in the layer region adjacent to the immediate inflow region and possibly the adjacent lower layer of the moving bed a second separation stage is formed in which the catalytic removal of nitrogen largely takes place and that any non-catalyst-damaging toxic components which may be present, such as dioxins and furans, are removed by absorptive means in this second separation stage.

2. Method according to claim 1, **characterised in that** a fabric filter or electrostatic filter is installed before the moving bed reactor.

3. Method according to claim 1 or 2, **characterised in that** the gas purification in the moving bed reactor takes place at a gas intake temperature in the order of 70 to 160°C, preferably 90°C to 120°C.

4. Method according to one of the claims 1 to 3, **characterised in that** the waste gas from the glass melting process is first cooled or quenched to temperatures between 50 and 120°C, preferably between 60°C and 100°C, in one or two stages, possibly with the addition of dilution air and/or water.

5. Method according to one of the claims 1 to 4, **characterised in that** the toxic components which are to be removed substantially consist of arsenic and/or boron compounds.

6. Method according to one of the claims 1 to 5, **characterised in that** the toxic components which are to be removed in the first separation stage contain silicon, calcium, strontium and/or barium compounds.

7. Method according to one of the claims 1 to 6, **characterised in that** the nitrogen is removed with the addition of 80 % and more, preferably 90 % and more ammonia.

8. Method according to one of the claims 1 to 7, **characterised in that**, in the moving bed reactor, the cycles in which adsorbent and/or absorbent agents are extracted at the lower end of the moving bed and fresh or regenerated adsorbent and/or absorbent agents are re-filled at the upper end of the moving bed are performed depending on the loss in throughflow pressure experienced by the waste gas which is to be purified over the throughflow depth or a partial depth of the moving bed, or depending on the damage caused to the adsorbent and/or absorbent agents through the catalyst-damaging gaseous components in the inflow region and possibly in an adjacent lower layer.

9. Method according to one of the claims 1 to 8, **characterised in that** the adsorbent and/or absorbent agent consists of a, possibly layered, mixture of carbon-containing adsorbent and/or absorbent agents, in particular activated coke, and reactants for acidic toxic components, such as alkalis.

10. Method according to one of the claims 1 to 9, **characterised in that** the adsorbent and/or absorbent agent is an activated coke or a granulate which consists of inorganic components or a mixture of inorganic plus organic constituents/components.

11. Method according to one of the claims 1 to 10, **characterised in that** the waste gases contain SO₂, HCI, heavy metals, in particular Hg, dioxins, furans, dusts, condensable residues and/or sublimates of a part of the inorganic toxic components.

12. Method according to one of the claims 1 to 11, **characterised in that** the depth of the contaminated layer is kept shallow in comparison with the overall layer depth of the granulate bed through the removal of laden and thus catalytically damaged granulate.

13. Method according to one of the claims 1 to 12, **characterised in that** the catalyst poisons separated in the first separation stage are discharged cyclically with the consumed adsorbent and/or absorbent agent.

14. Method according to one of the claims 1 to 13, **characterised in that** the waste gases are first cooled so that sublimation processes can take place and that sublimation crystals are adhered to the adsorbent and/or absorbent agents in the first separation stage.

## Revendications

1. Procédé d'épuration des gaz d'échappement d'un processus de fusion de verre, en particulier pour des verres pour des écrans LCD, selon lequel, on charge la cuve de verre avec un matériau brut pour la fabrication du verre renfermant SiO₂ et des additifs tels que des composés de bore, d'arsenic, et/ou d'autres composés en particuliers métalliques, on soutire le verre fondu de cette cuve de verre, et on chauffe celle-ci avec des gaz d'échappement de combustion chauds, et selon lequel, les gaz d'échappement provenant des gaz de combustion et/ou du verre fondu (1) renferment outre des composants gazeux du groupe CO₂, O₂, H₂O et/ou N₂, au moins NOₓ ainsi que des composants nocifs provenant ou dégagés du matériau brut tels que SO₂, HCl, des métaux lourds, en particulier Hg, de la dioxine, du furane, des poussières, des résidus condensables et/ou des produits sublimation d'une partie des composants nocifs anorganiques,
les gaz d'échappement du processus de fusion du verre, étant débarrassés des composants nocifs, le cas échéant après une étape d'épuration préalable, dans un dispositif de réacteur à lit mobile (8), sur au moins un agent d'adsorption catalytiquement actif et/ou un agent d'absorption catalytiquement actif dans un et le même lit mobile, en au moins deux étapes,
procédé **caractérisé en ce que**
le dispositif de réacteur à lit mobile est un réacteur à lit mobile à contre-courant,
**en ce que** dans la zone d'écoulement direct et le cas échéant dans une couche inférieure voisine du lit mobile (8A) se produit une première étape de séparation dans laquelle des composants nocifs de nature à endommager le catalyseur, et des composés de nature à endommager le catalyseur provenant au moins de la composition du matériau brut, tels que des composés de bore et/ou d'arsenic sont liés par absorption et les composants sous forme de particules, font l'objet d'une adhérence, et
**en ce que** dans la zone laminaire (8B) immédiatement contigüe à la zone d'écoulement et le cas échéant dans la couche inférieure voisine du lit mobile, se produit une deuxième étape de séparation, dans laquelle une dénitrification est largement mise en oeuvre, et d'autres composants nocifs n'endommageant pas le catalyseur, le cas échéant présents tels que la dioxine et le furane sont éliminés par absorption.

2. Procédé conforme à la revendication 1,
**caractérisé en ce qu'**
un filtre texturé ou un électrofiltre (5) est branché en amont du dispositif de réacteur à lit mobile.

3. Procédé conforme à la revendication 1 ou 2,
**caractérisé en ce que**
l'épuration des gaz dans le dispositif de réacteur à lit mobile, est mise en oeuvre à une température d'entrée des gaz d'environ 70 à 160°C, de préférence de 90°C à 120°C.

4. Procédé conforme à l'une des revendications 1 à 3,
**caractérisé en ce que**
les gaz d'échappement du processus de fusion du verre, sont tout d'abord refroidis ou trempés en une ou plusieurs étape(s), le cas échéant avec addition d'air de dilution et/ou d'eau, à des températures comprises entre 50 et 120°C, de préférence entre 60°C et 100°C.

5. Procédé conforme à l'une des revendications 1 à 4,
**caractérisé en ce que**
les composants nocifs à éliminer sont essentiellement constitués par des composés d'arsenic et/ou de bore.

6. Procédé conforme à l'une des revendications 1 à 5,
**caractérisé en ce que**
les composants nocifs à éliminer lors de la première étape de séparation renferment des composés de silicium, de calcium, de strontium et/ou de baryum.

7. Procédé conforme à l'une des revendications 1 à 6,
**caractérisé en ce que**
la dénitrification s'effectue par addition d'ammoniac jusqu'à 80 % et plus de préférence jusqu'à 90 % et plus.

8. Procédé conforme à l'une des revendications 1 à 7,
**caractérisé en ce que**
dans le dispositif de réacteur à lit mobile, les périodes de soutirage d'agent d'adsorption et/ou d'agent d'absorption à l'extrémité inférieure du lit mobile et d'ajout d'agent d'adsorption et/ou d'agent d'absorption frais ou régénéré à l'extrémité supérieure du lit mobile sont fonction de la perte de pression d'écoulement que subissent les gaz d'échappement à épurer sur la profondeur d'écoulement du lit mobile ou sur une partie de cette profondeur, ou sont fonction de la détérioration de l'agent d'adsorption et/ou de l'agent d'absorption du fait des composants gazeux de nature à endommager le catalyseur dans la zone découlement et le cas échéant dans une couche inférieure voisine.

9. Procédé conforme à l'une des revendications 1 à 8,
**caractérisé en ce que**
l'agent d'adsorption et/ou l'agent d'absorption est constitué par un mélange, le cas échéant lamellaire d'agents d'adsorption et/ou d'agents d'absorption renfermant du carbone, en particulier du charbon actif et d'agents de réaction de composants nocifs acides, tels que des composés alcalins.

10. Procédé conforme à l'une des revendications 1 à 9,
**caractérisé en ce que**
l'agent d'adsorption et/ou l'agent d'absorption est un charbon actif ou un granulat constitué de composés anorganiques ou d'un mélange de composés/éléments anorganiques et organiques.

11. Procédé conforme à l'une des revendications 1 à 10,
**caractérisé en ce que**
les gaz d'échappement renferment SO₂, HCl, des métaux lourds, en particulier Hg, de la dioxine, du furane, des poussières, des résidus condensables et/ou des produits de sublimation d'une partie des composants nocifs anorganiques.

12. Procédé conforme à l'une des revendications 1 à 11,
**caractérisé en ce que**
la hauteur de couche contaminée est maintenue faible par rapport à la hauteur de couche totale du lit granulaire suite à l'évacuation de granulat chargé et par suite catalytiquement endommagé.

13. Procédé conforme à l'une des revendications 1 à 12,
**caractérisé en ce que**
les déchets toxiques de catalyseur séparés lors de la première étape de séparation, sont périodiquement évacués vers l'extérieur avec l'agent d'adsorption et/ou l'agent d'absorption consommé.

14. Procédé conforme à l'une des revendications 1 à 13,
**caractérisé en ce que**
les gaz d'échappement sont tout d'abord refroidis de façon à permettre la mise en oeuvre d'un processus de sublimation et **en ce que** lors de la première étape de séparation, des cristaux de sublimation adhèrent sur l'agent d'adsorption et/ou l'agent d'absorption.
